# EUROPEAN PATENT SPECIFICATION

(11) **EP 0 975 502 B1**
(45) Date of publication and mention of the grant of the patent: **12.01.2005**
(21) Application number: 98917874.4
(22) Date of filing: 09.04.1998
(51) Int. Cl.: B61F 1/08, B61F 1/00, B61D 17/00

(54) **PART MASS SEPARATED FROM CARBODY**
VOM WAGENKASTEN GETRENNTE TEILMASSE
MASSE PARTIELLE SEPAREE D'UNE CARROSSERIE

(30) Priority: 15.04.1997 SE 9701378
(43) Date of publication of application: 02.02.2000
(73) Proprietor: Bombardier Transportation GmbH, 13627 Berlin (DE)
(72) Inventor: PERSSON, Richard, S-723 55 Västeras (SE); ANDERSSON, Evert, S-723 35 Västeras (SE); BERGGREN, Sören, S-724 62 Västeras (SE); HERMODSSON, Magnus, S-392 34 Kalmar (SE)
(74) Representative: Akers, Noel James
(86) International application number: PCT/SE1998/000658
(87) International publication number: WO 1998/046467

(56) References cited:
- DERWENT'S ABSTRACT, No. 85-234881/38, Week 8538; & SU,A,1 142 339 [RAILWAY TRANSPORTINST (BRYA=)] 28 February 1985.
- DERWENT'S ABSTRACT, No. 89-268825/37, Week 8937; & SU,A,1 463 589 [VOLG POLY (RATR)] 7 March 1989.
- DERWENT'S ABSTRACT, No. 90-266917/35, Week 9035; & SU,A,1 523 444 (KATSURAYA KK) 23 November 1989.

## Description

### TECHNICAL FIELD

When running fast railway vehicles along a track, vibrations and oscillations from the track propagate via one or more bogies to a carbody which is supported by these bogies. If the natural frequency of the carbody is low, carbody oscillation resonance may arise when running the vehicle at high speeds. These resonances occur at lower speeds when carbodies are made longer and lighter. The present invention relates to a method and a device which prevent the occurrence of the drawbacks described at the vehicle speeds occurring.

### BACKGROUND ART

For several reasons, requirements for good running properties are imposed on trains intended for high speeds. One such reason is that the high speed gives the train greater sensitivity to the irregularites of a railway track, such that shaking and vibrations for one and the same track position quality become greater. Since a track exhibits greater amplitudes of long-wave deviations from an ideal track position than of corresponding short-wave deviations, the amplitude of disturbances from the track increase at all disturbance frequencies at increased speed of the train. Another reason is that the requirements for good running. properties, small vibrations, a low sound level etc., are generally high for fast trains.

The above-mentioned requirements are further accentuated in those cases where high-speed trains are to be able to be run on already existing tracks with track position qualities, curve radii etc., which from the start are specified for conventional trains which are run at lower speeds.

Structural stiffnesses in the carbody and the bogie together with a primary suspension at the wheel axles of the bogie are important parameters which influence the running properties of a train vehicle. Another important field to consider is the lateral dynamics of the vehicle, such as the interaction between the lateral movements of the bogies and the carbody. In this connection, the hunting of the bogies along the track, the running stability of the bogies and the cooperation between the hunting of the bogies and the oscillations of the carbody in the lateral direction exert an influence.

The lateral oscillations have previously been considered only to a limited extent. It has proved that too low a natural frequency of the carbody, about 8 to 9 Hz, may lead to considerable problems with joint oscillations between the bogie and the carbody at high speeds of the vehicle.

The stiff-body frequencies for bogies are normally lower than the natural frequency of the carbody. Typical values for the stiff-body frequencies of the bogie are 5 to 8 Hz. Problems may arise when the natural frequency of the carbody approaches the stiff-body frequency of a bogie. Normally, the natural frequency of the carbody is kept higher than the stiff-body frequency of the bogie in that the carbody in accordance with prior art is designed with a high bending rigidity, that the carbody is short and further that its load is low. It has previously been possible to design vehicles in this way, when trains have been provided with passenger cars which have been pulled by locomotives. The cars may then be made ligher than in those cases where the cars in a train set consist of motor cars which comprise propulsion equipment. It has, of course, been possible to use long cars where the speed of a train has been lower than what is required in the case of high-speed trains.

In parallel with requirements for higher speeds and better running properties, new requirements are also currently made on railway vehicles, such as, for example, that the carbodies are to be made longer to provide greater passenger space at a low cost, that the car bodies shall have large doors with low entrances, sometimes even with the doors placed between the bogies, that the cars shall have a low weight, and that the vehicles are designed as motor cars.
The result of all this is that the natural frequencies of the carbodies decrease. A long car imparts a lower natural frequency to the carbody. The requirements for the location, size and entrances of the doors reduce the possibilities of giving the carbodies sufficient bending rigidity, while at the same time measures increasing the bending rigidity increase the weight of the carbody. The requirements for the vehicle being designed as a motor car increase the load of the carbody, in which case also this leads to a reduced natural frequency of the carbody.

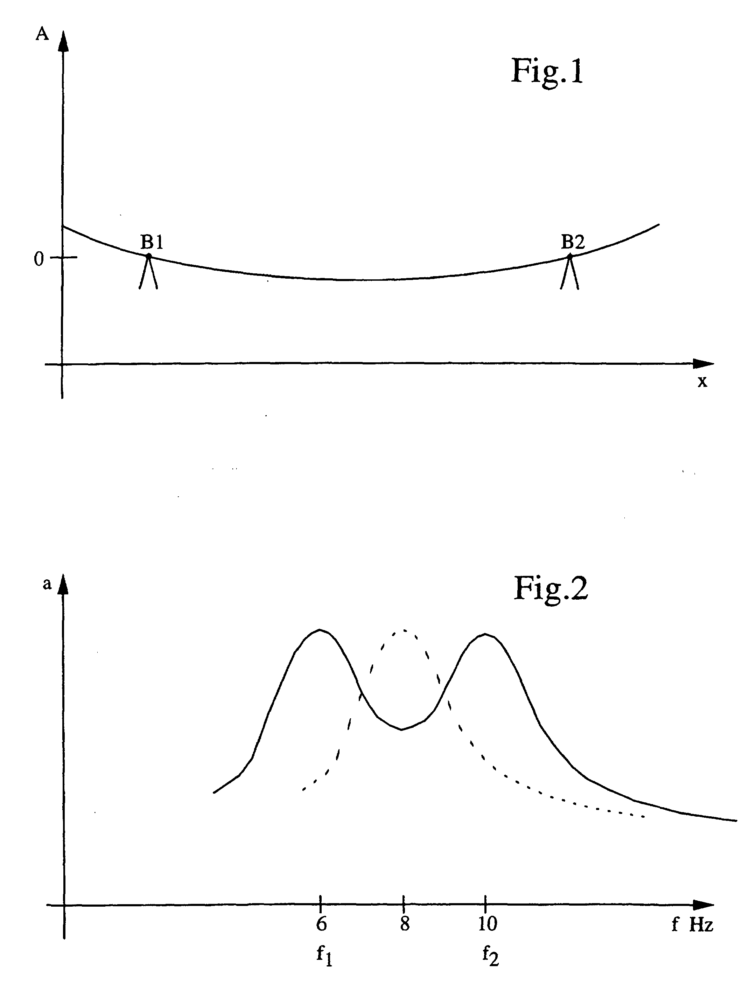

When a carbody starts oscillating at its natural frequency, a so-called banana bend occurs in the simplest case (see Fig. 1), this name being given to this oscillation because of the appearance of the oscillation curve. Figure 1 shows the maximum deflection A for the oscillation of the carbody at one of the end positions of the oscillation as a function of its longitudinal position x. It is clear that the deflection is approximately zero at the respective bogie, whereas the ends of the carbody have large deflections in the same direction and the carbody centre a large deflection in the opposite direction. From this it is clear that the comfort for passengers is worst at the carbody centre and the car-body ends during oscillations with the natural frequency.

It has been suggested in Derwent's abstract No 90-266917/35, week 9035, abstract of SU1523444, to provide a railway wagon with a dynamic absorber consisting of a number of weights suspended to the car-body through elastic elements. Such a system however cannot reduce the mass of the car-body and increase the natural frequency of the car-body.

### SUMMARY OF THE INVENTION

According to one aspect of the invention, in a railway vehicle, the natural frequency of the carbody of the vehicle is increased by a part mass being separated dynamically from the carbody.

By the above-mentioned separation, the natural frequency of the carbody increases since the separated mass does not load the carbody dynamically. The separation of a part mass is achieved by the part mass being suspended resiliently from the carbody.

According to a further aspect of the invention, the stiff-body frequency of the part mass is tuned in relation to the natural frequency of the main mass of the carbody, such that two natural frequencies are imparted to the cooperating system comprising the main mass of the carbody and its separated part mass, whereby the part mass oscillates most at a lower and the carbody with its main mass oscillates most at a higher frequency.

The weight of the separated part mass is of importance. Up to a certain limit, the gain in comfort increases with the weight of the separated part mass. The weight of the part mass should amount to at least 10% of the remaining mass of the carbody in order for a noticeable improvement of the natural oscillation problems to be attained.

The separated part mass according to the invention consists of a transformer package or of a separated underframe. There is no point in adding an extra mass as separated mass.

It is conceivable to make use of resiliently suspended traction motors as separated part masses. Usually, however, the masses of the traction motors are too small in this connection. Resilient suspension of traction motors already exists in the prior art, but the technique is then used for filtering away vibrations which are generated by the traction motors.

Since a part mass of the carbody is resiliently suspended, the natural frequency of the carbody will increase due to the fact that the part mass no longer needs to be included in the carbody weight. As a result of this, an increase of the natural frequency of the carbody of about 1 Hz is obtained. Further, if the natural frequency of the part mass is tuned in relation to the stiff-body frequency of the carbody, an additional increase of the natural frequency of the carbody of 1 Hz is obtained. Taken together, a resilient suspension of a part mass of the carbody implies that the carbody may be given a natural frequency which is 2 Hz higher than without separation of the part mass. The natural frequency of the carbody in the lateral direction may thus be given values which exceed 10 Hz also for motor cars with lengths of about 26 m.

If measures suggested by the invention are taken, a vehicle may be run at a higher speed than what would be the case with a vehicle designed in accordance with prior art, without lateral self-oscillations of the carbody creating problems with the comfort.

### BRIEF DESCRIPTION OF THE DRAWING

Figure 1 shows the simplest oscillation configuration of a carbody which oscillates with its natural frequency. The deflection is shown as a function of the longitudinal position of the carbody.
Figure 2 shows the acceleration for a system with an oppositely oscillating separated mass and the acceleration for a system without a separated part mass, respectively.
Figure 3 schematically illustrates how a part mass is mechanically separated from the main mass of the carbody in a railway vehicle by means of a resilient suspension.
Figures 4a - 4c show examples of resilient elements which may be used in a resilient suspension of the part mass of the carbody.

### DESCRIPTION OF THE PREFERRED EMBODIMENTS

A number of embodiments of the invention will be described with reference to the figures.

Figure 1 illustrates the appearance of the self-oscillation in the form of the lateral deviation of the carbody from its position of equilibrium along its length x at a certain moment. B1 and B2 illustrate bogie positions of the car-body. At the bogies, the deflection of the oscillation is almost non-existent. The greatest deflection takes place at the centre of the carbody and, to a certain extent, also at the ends of the car.

By dynamically separating a part mass of the carbody, accelerations of the carbody are obtained according to Figure 2, where the acceleration, a, of the carbody is plotted as a function of the frequency f. This example shows a first oscillation peak at the frequency f₁ corresponding to the stiff-body frequency of the oppositely oscillating part mass and a second oscillation peak at the frequency f₂ for the main mass of the carbody. In the example shown, the natural frequency of the oppositely oscillating mass is 6 Hz, whereas the rest of the carbody has the natural frequency 10 Hz. Without the described separation of a part mass, it may be read from the dash-lined curve that the natural frequency of the carbody is about 8 Hz. By the described separation, a higher natural frequency has been imparted to the main mass of the carbody itself. The natural frequency of the carbody has thus been separated from the solid-body frequencies of the underlying bogies which are about 6 - 7 Hz, whereby the advantage is achieved that bogie oscillations do not generate self-oscillations laterally of the carbody.

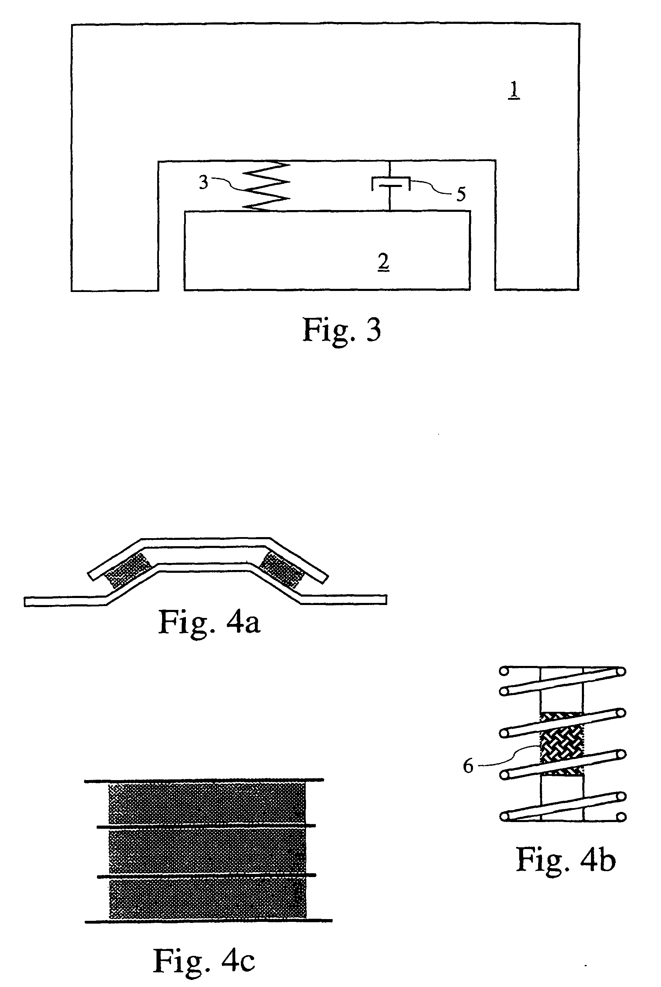

An execution of a dynamic separation according to the invention is clear from Figure 3. In this figure, a carbody has been divided into the main mass 1 of the carbody and a separated part mass 2. The part mass is dynamically separated from the main mass 1 by means of a spring 3. A damper 5 is also arranged between the main mass and the part mass. Both the spring 3 and the damper 5 are utilized in the number which is necessary for achieving the necessary resilience and damping and for absorption of forces, respectively. The spring and the damper are suitably designed also in such a way that the natural frequency for the main mass of the carbody becomes as high as possible. Calculations have shown that the best comfort inside the carbody is obtained if the oppositely oscillating part mass is given a solid-body frequency in the order of magnitude of 2 Hz lower than the natural frequency of the carbody.

Normally, problems with comfort according to the prior art, where masses are separated by resilient suspension, involve a desire to prevent the transmission of vibrations or noise from equipment to the carbody. In this connection, it may, for example, occur that a traction motor is suspended in a resilient manner in relation to the carbody.

The most suitable part mass 2 in a carbody, in which the natural frequency is to be raised according to the inventive aspect, is a transformer present in the car. Such a transformer has a sufficient weight to achieve the necessary increase of the natural frequency for the car-body. The transformer is suspended by means of suitable springs 3. At least three different types of springs of a well-known type, all with a certain damping of their own, may be used in the separation described. These examples of springs are shown in Figures 4a-4c.

Figure 4a shows a rubber spring. This variant with rubber elements between roof-shaped metal linings is especially suitable when it is desired to obtain different spring constants in different directions, for example laterally and longitudinally.

Figure 4b illustrates a helical spring of a special type in which the spring is combined with a knitted steel wire 6 to give the spring a desired damping. A disadvantage of this type of spring may be its space requirement.

A further variant of spring is shown in Figure 4c, in which a metal-rubber spring is shown. Such a spring is built up of layered metal plates with rubber liners between every other layer.

The suspension of, for example, a transformer for achieving the desired separated mass may be carried out with the desired number of springs. In the simplest case, in case of a transformer package which is rectangular viewed from above, the separation is carried out by means of one spring in each corner, where in each corner one of, for example, some of the spring types according to Figures 4a-4c is applied. By selection of spring parameters and location of springs, the suspension may be tuned such that the natural frequency for the main mass of the carbody may be optimally increased.

The springs 3 are provided with internal damping means, shown in the figures as dampers 5. These dampers carry away energy such that an oscillation arisen may be damped in a known manner. It is, of course, possible to arrange separate dampers between the part mass and the carbody, if this should be considered justified.

The location of the oppositely oscillating mass is preferably near the centre of the carbody in the longitudinal direction, or at some of its ends, since the movements of the carbody are greatest at these positions.

In the solutions described above, the design must also be supplemented by devices to manage sudden stops by means of devices which manage maximum loads.

## Claims

1. A method in a railway vehicle which comprises a car body and at least two running gears for increasing the difference in frequency between the natural frequency of the car body and the stiff-body frequencies of a running gear, wherein a part mass (2) is separated dynamically from a main mass (1) of the car body for reducing vibrations of the car body, the part mass (2) being resiliently suspended to the car body by means of a spring (3), damping (5) being arranged between the part mass (2) and the main mass (1).

2. A method according to claim 1, Wherein the stiff-body frequency of the part mass (2) is tuned in relation to the natural frequency of the main mass (1) of the car body, such that two natural frequencies are imparted to the cooperating system comprising the main mass (1) of the car body and its separated part mass (2), whereby the part mass (2) oscillates most at a lower and the car body with its main mass (1) oscillates most at a higher frequency.

3. A method according to any of the preceding claims, wherein the part mass (2) constitutes at least 10% of the weight of the car body.

4. A method according to any of the preceding claims, wherein the solid-body frequency of the part mass (2) is in the order of magnitude of 2 Hz lower than the natural frequency of the car body.

5. A method according to any of the preceding claims, wherein the part mass (2) is a transformer.

6. A method according to any of the claims 1 to 4, wherein the part mass (2) is a car under-frame.

7. A method according to any of the preceding claims, wherein the dynamic separation is carried out in at least one of the main directions of the vehicle laterally, longitudinally or vertically.

8. A method according to any of the preceding claims, wherein the part mass (2) is suspended resiliently near the centre of the vehicle or at one of the ends of the vehicle.

9. A method according to any of the preceding claims, wherein the natural frequency imparted to the main mass (1) is higher than the stiff-body frequencies of the running gears.

10. A railway vehicle which comprises a car body supported by at least two running gear, wherein a part mass (2) that constitutes at least 10% of the weight of the car body is separated dynamically from a main mass (1) of the car body whereby the natural frequency of the main mass (1) is higher than the stiff-body frequencies of the running gear, the part mass (2) being resiliently suspended to the car body by means of a spring (3), damping (5) being arranged between the part mass (2) and the main mass (1).

11. A railway vehicle according to claim 10, wherein the stiff-body frequency of the part mass (2) is such that two natural frequencies are imparted to the cooperating system comprising the main mass (1) of the car body and its separated part mass (2), whereby the part mass (2) oscillates most at a lower and the car body with its main mass (1) oscillates most at a higher frequency.

12. A railway vehicle according to claim 10 or 11, wherein the solid-body frequency of the part mass (2) is in the order of magnitude of 2 Hz lower than the natural frequency of the car body.

13. A railway vehicle according to any one of claims 10 to 12, wherein the part mass (2) consists of a transformer.

14. A railway vehicle according to any one of claims 10 to 13, wherein the part mass (2) consists of a car under-frame.

15. A railway vehicle according to any one of claims 10 to 14, wherein the separated part mass (2) is located at the longitudinal centre of the vehicle or at one of the ends of the vehicle.

## Patentansprüche

1. Verfahren in einem Schienenfahrzeug bestehend aus einem Aufbau und mindestens zwei Laufwerken zur Vergrößerung des Unterschieds zwischen der Eigenschwingung des Aufbaus und der Stärrkörperschwingung eines Laufwerks, wobei eine Teilmasse (2) dynamisch von der Hauptmasse (1) des Aufbaus getrennt wird, um die Schwingungen des Aufbaus zu reduzieren, wobei die Teilmasse (2) elastisch über eine Feder (3) am Aufbau gelagert ist und die Dämpfung (5) zwischen der Teilmasse (2) und Hauptmasse (1) angeordnet ist.

2. Verfahren nach Anspruch 1, wobei die Starrkörperschwingung der Teilmasse (2) so auf die Eigenschwingung der Hauptmasse (1) des Aufbaus abgestimmt wird, dass zwei Eigenschwingungen auf das kooperierende System bestehend aus der Hauptmasse (1) des Aufbaus und der davon abgetrennten Teilmasse (2) übertragen werden, wodurch die Teilmasse (2) am stärksten bei einer niedrigeren und der Aufbau mit seiner Hauptmasse (1) am stärksten bei einer höheren Frequenz schwingen.

3. Verfahren nach einem der vorhergehenden Ansprüche, wobei die Teilmasse (2) mindestens 10% des Gewichts des Aufbaus ausmacht.

4. Verfahren nach einem der vorhergehenden Ansprüche, wobei die Starrkörperschwingung der Teilmasse (2) in der Größenordnung von 2 Hz niedriger ist als die Eigenschwingung des Aufbaus.

5. Verfahren nach einem der vorhergehenden Ansprüche, wobei die Teilmasse (2) ein Transformator ist.

6. Verfahren nach den Ansprüchen 1 bis 4, wobei die Teilmasse (2) ein Fahrzeug-Untergestell ist.

7. Verfahren nach einem der vorhergehenden Ansprüche, wobei die dynamische Trennung quer, längs oder vertikal in mindestens einer der Hauptrichtungen des Fahrzeugs erfolgt.

8. Verfahren nach einem der vorhergehenden Ansprüche, wobei die Teilmasse (2) federnd in der Nähe der Fahrzeugmitte oder an einem Fahrzeugende aufgehängt ist.

9. Verfahren nach einem der vorhergehenden Ansprüche, wobei die auf die Hauptmasse (1) übertragene Eigenschwingung höher ist als die Starrkörperschwingungen der Laufwerke.

10. Schienenfahrzeug bestehend aus einem Aufbau gestützt auf mindestens zwei Laufwerken, wobei eine Teilmasse (2) mit einem Gewicht in einer Größenordnung von mindestens 10% des Gewichts des Aufbaus dynamisch von der Hauptmasse (1) des Fahrzeugs getrennt ist, wodurch die Eigenschwingung der Hauptmasse (1) höher als die Starrkörperschwingungen der Laufwerke ist, wobei die Teilmasse (2) elastisch am Aufbau über eine Feder (3) gelagert ist und die Dämpfung (5) zwischen der Teilmasse (2) und der Hauptmasse (1) angeordnet ist.

11. Schienenfahrzeug nach Anspruch 10, wobei die Starrkörperschwingung der Teilmasse (2) so ausgelegt ist, dass zwei Eigenschwingungen an das kooperierende System bestehend aus der Hauptmasse (1) des Aufbaus und der von ihr getrennten Teilmasse (2) übertragen werden, wodurch die Teilmasse (2) am stärksten bei einer niedrigeren und der Aufbau mit seiner Hauptmasse (1) am stärksten bei einer höheren Frequenz schwingen.

12. Schienenfahrzeug nach Anspruch 10 oder 11, wobei die Starrkörperschwingung der Teilmasse (2) in der Größenordnung von 2 Hz niedriger ist als die Eigenschwingung des Aufbaus.

13. Schienenfahrzeug nach einem der Ansprüche 10 bis 12, wobei die Teilmasse (2) aus einem Transformator besteht.

14. Schienenfahrzeug nach einem der Ansprüche 10 bis 13, wobei die Teilmasse (2) aus einem Fahrzeug-Untergestell besteht.

15. Schienenfahrzeug nach einem der Ansprüche 10 bis 14, wobei die abgetrennte Teilmasse (2) sich in der Längsmitte des Fahrzeugs oder an einem Fahrzeugende befindet.

## Revendications

1. Une méthode dans un véhicule ferroviaire qui comprend une caisse de wagon et au moins deux trains de roulement pour augmenter la différence de fréquence entre la fréquence naturelle de la caisse de wagon et les fréquences de corps rigide d'un train de roulement, où une masse partielle (2) est séparée dynamiquement d'une masse principale (1) de la caisse de wagon pour réduire les vibrations de la caisse de wagon, la masse partielle (2) étant suspendue de manière élastique à la caisse de wagon au moyen d'un ressort (3), l'amortissement (5) étant agencé entre la masse partielle (2) et la masse principale (1).

2. Une méthode selon la revendication 1, où la fréquence de corps rigide de la masse partielle (2) est accordée en relation avec la fréquence naturelle de la masse principale (1) de la caisse de wagon, de sorte que deux fréquences naturelles sont imparties au système coopérant comprenant la masse principale (1) de la caisse de wagon et sa masse partielle séparée (2), grâce à quoi la masse partielle (2) oscille principalement à une fréquence plutôt basse et la caisse de wagon avec sa masse principale (1) oscille principalement à une fréquence plutôt haute.

3. Une méthode selon l'une quelconque des revendications précédentes, où la masse partielle (2) constitue au moins 10% du poids de la caisse de wagon.

4. Une méthode selon l'une quelconque des revendications précédentes, où la fréquence de corps plein de la masse partielle (2) est d'une ampleur de l'ordre de 2 Hz plus basse que la fréquence naturelle de la caisse de wagon.

5. Une méthode selon l'une quelconque des revendications précédentes, où la masse partielle (2) est un transformateur.

6. Une méthode selon l'une quelconque des revendications 1 à 4, où la masse partielle (2) est un châssis de wagon.

7. Une méthode selon l'une quelconque des revendications précédentes, où la séparation dynamique est effectuée dans au moins une des principales directions du véhicule latéralement, longitudinalement ou verticalement.

8. Une méthode selon l'une quelconque des revendications précédentes, où la masse partielle (2) est suspendue de manière élastique près du centre du véhicule ou à une des extrémités du véhicule.

9. Une méthode selon l'une quelconque des revendications précédentes, où la fréquence naturelle impartie à la masse principale (1) est plus élevée que les fréquences de corps rigide des trains de roulement.

10. Un véhicule ferroviaire qui comprend une caisse de wagon soutenue par au moins deux trains de roulement, où une masse partielle (2) qui constitue au moins 10% du poids. de la caisse de wagon est séparée dynamiquement d'une masse principale (1) de la caisse de wagon grâce à quoi la fréquence naturelle de la masse principale (1) est plus élevée que les fréquences de corps rigide du train de roulement, la masse partielle (2) étant suspendue de manière élastique à la caisse de wagon au moyen d'un ressort (3), l'amortissement (5) étant agencé entre la masse partielle (2) et la masse principale (1).

11. Un véhicule ferroviaire selon la revendication 10, où la fréquence de corps rigide de la masse partielle (2) est telle que deux fréquences naturelles sont imparties au système coopérant comprenant la masse principale (1) de la caisse de wagon et sa masse partielle séparée (2), grâce à quoi la masse partielle (2) oscille principalement à une fréquence plutôt basse et la caisse de wagon avec sa masse principale (1) oscille principalement à une fréquence plutôt haute.

12. Un véhicule ferroviaire selon la revendication 10 ou 11, où la fréquence de corps plein de la masse partielle (2) est d'une ampleur de l'ordre de 2 Hz plus basse que la fréquence naturelle de la caisse de wagon.

13. Un véhicule ferroviaire selon l'une quelconque des revendications 10 à 12, où la masse partielle (2) consiste en un transformateur.

14. Un véhicule ferroviaire selon l'une quelconque des revendications 10 à 13, où la masse partielle (2) consiste en un châssis de wagon.

15. Un véhicule ferroviaire selon l'une quelconque des revendications 10 à 14, où la masse partielle séparée (2) est située au centre longitudinal du véhicule ou à une des extrémités du véhicule.
